# EUROPEAN PATENT SPECIFICATION

(11) **EP 2 658 056 B1**
(45) Date of publication and mention of the grant of the patent: **11.07.2018**
(21) Application number: 13165268.7
(22) Date of filing: 25.04.2013
(51) Int. Cl.: H02G 3/12, A47B 21/06, H02G 3/18, H01R 13/73

(54) **Support for electrical devices**
Stütze für elektrischen Vorrichtungen
Support pour dispositifs électriques

(30) Priority: 25.04.2012 ES 201230618
(43) Date of publication of application: 30.10.2013
(73) Proprietor: Simon, S.A., 08013 Barcelona (ES)
(72) Inventor: Moret Codina, Maria Cristina, 08013 BARCELONA (ES)
(74) Representative: Ponti & Partners, S.L.P

(56) References cited:
- EP-A1- 2 302 751
- DE-U1- 20 206 740
- US-A- 5 230 552
- US-A1- 2010 147 547

## Description

The present invention relates to a support for electrical devices such as electrical, voice and data sockets, multiple bases or other similar electrical devices, preferably adapted to be fixed to the lower surface of a table, which allows a comfortable and better use of the table.

### Background of the Invention

Enclosures are known which comprise a plurality of electrical devices arranged in a row such that a longitudinal axis thereof is defined which are attached directly or via a casing to a surface. These enclosures can be arranged, for example, fixed to the lower surface of a table, in general with said axis, i.e. the longitudinal or greater direction of the enclosure, parallel to the edge of the table, so that electrical devices are easily accessible. DE20206740U discloses a support for electrical devices according to the preamble of claim 1. The enclosure may also be provided under the table, not necessarily parallel to the edge of the table, for example perpendicular to it. In this case, it is more cumbersome to access the electrical devices, but these remain hidden and it is particularly comfortable to sit since with such electrical devices in this position.

Therefore, the inventors considered necessary to have a support of electrical devices which avoids the disadvantages of both mounting arrangements, but which in turn could exploit the advantages of both, so that they propose the invention described below.

### Description of the invention

The invention avoids the above disadvantages with the features of claim 1. Thus, it is possible to have an electrical device with convenient access for use and for connecting data and power cables, and also to maintain electrical devices hidden and without being cumbersome to someone sitting at the table.

The invention may preferably incorporate the following features combined wherever possible:
- the fixation plate comprises a circular guide which encompasses a predetermined angle and further comprises a retention element between the casing and the circular guide of the fixation plate .
- the support comprises locking means in many positions.
- these locking means comprise a stem arranged for moving longitudinally with respect to the casing, a lever for actuation of the stem at the end of the casing adjacent to the axis, protrusions of the plate provided with holes in which the stem engages in safety positions and a spring which pulls the stem towards said holes.
- the lever is articulated with an end lower edge of the casing, such that the liberation is done by pressing down the lever.
- the lever is made of a pleated sheet, preferably to confer it a three dimensional configuration and has a cut-out whose function is as a cable tidy.
- the casing houses the multiple socket-outlets.

Finally, the casing is shaped in the form of a parallelepiped and its frontal lower part is accessible for the placement and fixation of the multiple socket-outlets.

### Brief Description of the Figures

For a better understanding of what has been disclosed some drawings are attached in which, schematically and solely by way of non-limiting example, show a practical case of embodiment.
Figure 1 is an exploded perspective view in which are shown the main parts of the support for multiple socket-outlets of the invention.
Figure 2 is a perspective showing the casing / multiple socket-outlets / lever assembly, with a plug inserted in its respective socket-outlet.
Figure 3 is a perspective bottom view of a support according to the invention as it would appear if it were attached to a table.
Figure 4 illustrates in detail the stem in locking position.
Figure 5 is analogous to figure 3 but with the stem in the unlocked position.
Figure 6 is analogous to Figure 4 but with the stem in the unlocked position.
Figures 7 and 8 are similar to Figures 3 and 5, but in a position rotated 90 ° around the axis of articulation, with the stem on the locking and unlocking positions respectively.
Figures 9 and 10 are schematic plan views of the support of the invention, in both positions of use. In Figure 9 the support is arranged with its longitudinal axis parallel to the edge of the table, and electrical devices are easily accessible for connection.

In Figure 10, the support is arranged with its longitudinal axis perpendicular to the table edge.

### Description of a Preferred Embodiment

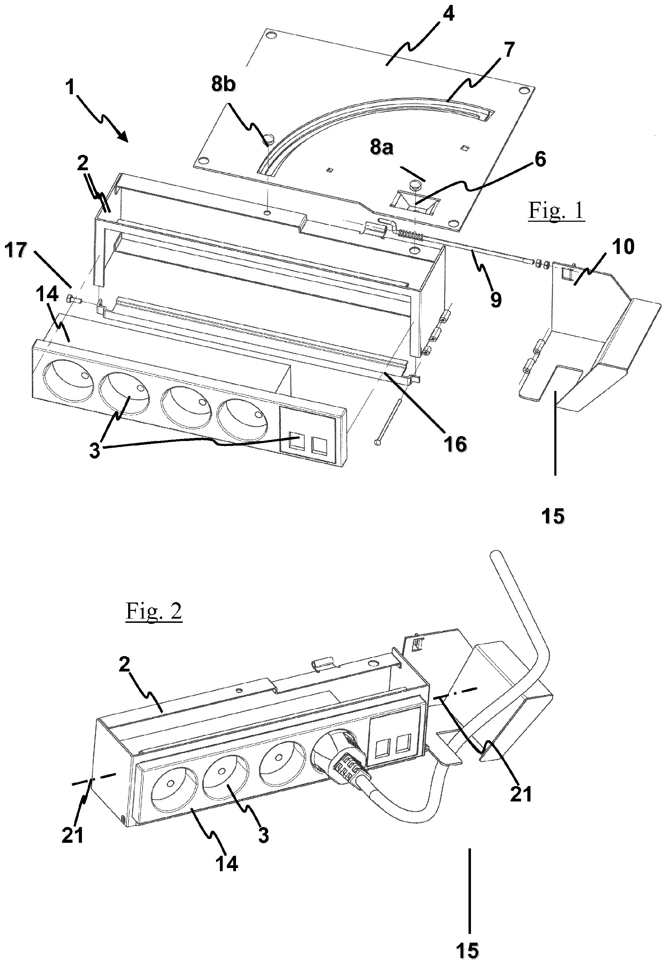

As can be seen in Figures 1 or 2, the invention generally relates to a support 1 for electrical devices 3, in which, for this embodiment, the electrical devices are grouped in a multiple socket-outlets 14 arranged in a casing 2 that houses a multiple socket-outlets 14 with a plurality of electrical devices 3 arranged in a row such that a longitudinal axis 21 of the casing 2 is defined and a fixation plate 4 to a surface 5.

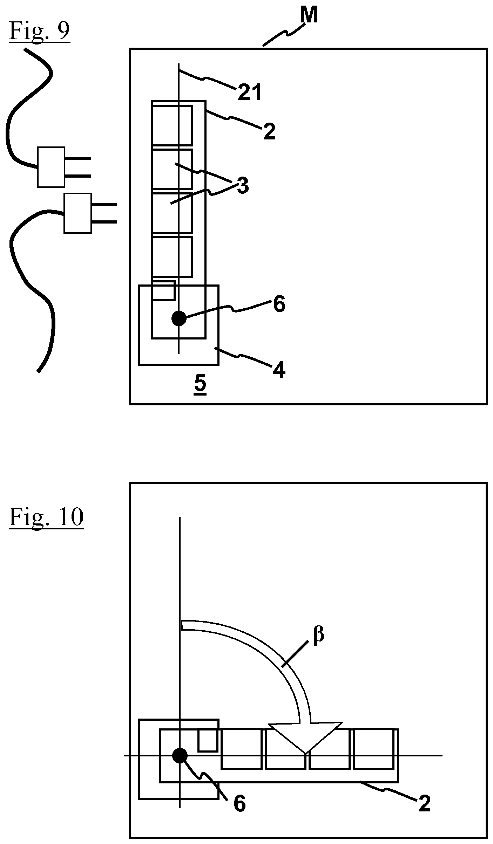

Specifically, and as shown in Figures 9 and 10, the invention is characterized in that said support comprises an articulation axis 6 linking the plate 4 and the casing 2 perpendicular to the plate 4 and to the longitudinal axis 21 of the casing 2 arranged at the end of the casing 2, such that when fixing the plate 4 to the bottom surface 5, of for example a table M, it is possible to rotate the casing 2 between two positions along an angle β. In this embodiment the angle β is 90°, where in the first position said casing 2 is parallel to the edge of the table M, as shown in Figure 9, and the second position in which it is perpendicular to the edge to the table M, as shown in Figure 10, where the housing 2, together with the electrical devices 3, are rotated 90 ° with respect to the first position.

In principle, this movement can be achieved by simply providing said axis of articulation 6, conducted via a rivet 8a, or more generally a separate retaining element that performs the same function, that allows rotation between the plate 4 and the casing 2 ensuring that said articulation axis 6 supports the lever efforts produced.

However, an embodiment is preferred in which the plate 4 also comprises a circular guide 7 that encompasses a 90° angle and a connecting rivet 8b between the housing 2 with said circular guide 7, thus enabling the displacement of the rivet 8b through the mentioned circular guide 7. The function of the circular guide 7 / rivet 8b set is also ensuring a correct parallelism between the plate 4 and the casing 2 and it also defines the end positions of the casing 2 in regards to the plate 4.

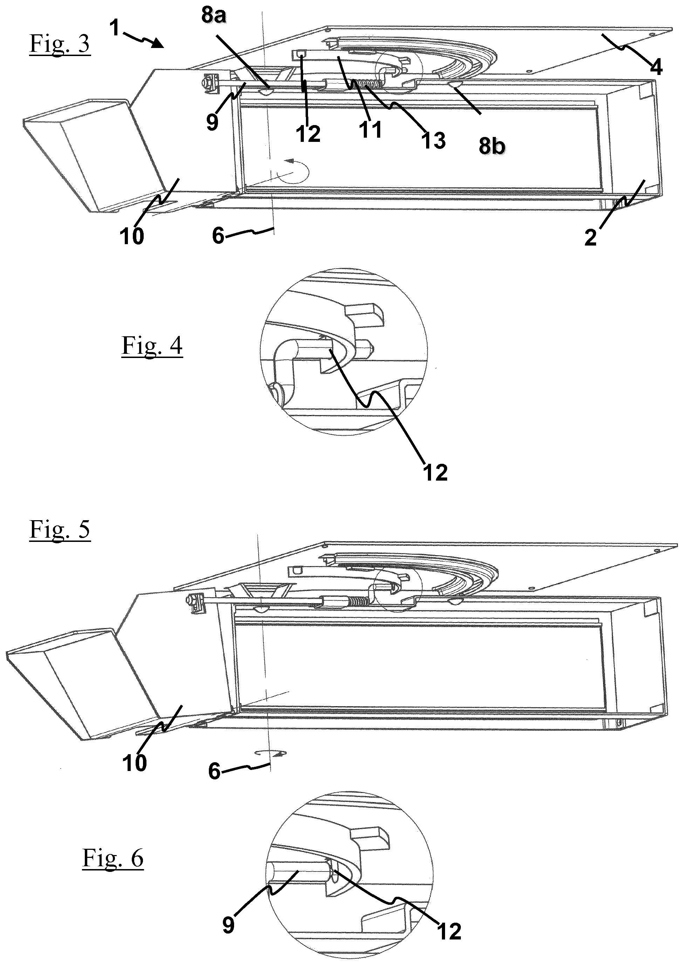

As can be seen in Figures 3 to 8, the support comprises locking means in the two end positions of the casing 2 so as to ensure the stability in both. In the first position, parallel to the edge of the table M, the locking means prevent the rotation of the casing 2 when it is pressed for the insertion of an electrical device. The locking means also ensure locking the casing 2 in the second position in order to prevent an unnoticed movement.

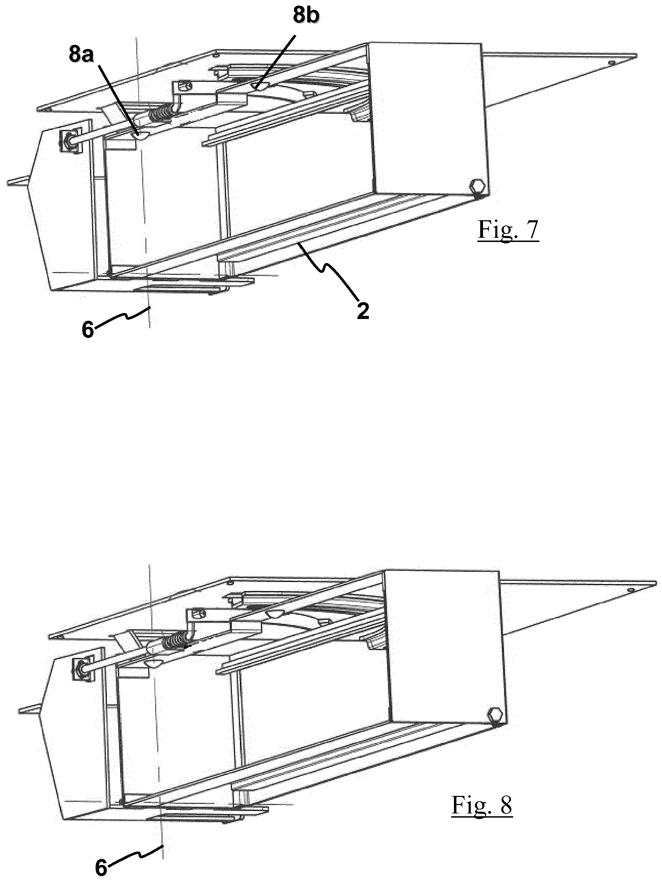

According to an especially preferred embodiment, the locking means comprise a stem 9 arranged for moving longitudinally with respect to the casing 2, a lever 10 to operate the stem 9 at the end of the casing 2 adjacent to the articulation axis 6, a protrusion 11 of the plate 4 provided with two holes 12 in which the stem 9 engages when the casing 2 is located at the end positions and a spring 13 which pulls the stem 9 towards said holes 12. The protrusion 11 is preferably a low arched wall in parallel to the circular guide 7 projecting inferiorly from the plate 4. With this arrangement, when disengaging the stem 9 from the opening of the wall and moving it angularly, making it pass over the low wall, it is not necessary to operate the lever 10 during the 90 °course. Also it is not necessary to actuate the lever 10 to reach the other end position, since the spring 13 will fit the stem 9 back in the corresponding hole 12, as illustrated by Figure 8.

As can be seen in Figures 3, 5, 7 and 8, the lever 10 is articulated with an end lower edge of the casing 2, such that the liberation is done by pressing down the lever 10, which is particularly comfortable to the user.

Preferably, the lever 10 is made of a pleated sheet, such that is particularly cheap, and as it can be seen in the figures, it provides a geometric continuity to the assembly. Moreover, the lever 10 has a cut-out 15 in its lower horizontal wall for use as a cable tidy of the cables to be connected in the multiple socket-outlets 14 that the casing 2 houses.

In this case, the casing 2 is shaped in the form of a parallelepiped and with its frontal lower part 16 accessible by means of the screw 17 for the fixation in the casing 2 of the electrical devices 3 or the multiple socket-outlets 14.

Although reference has been made to a specific embodiment of the invention, it is apparent to one skilled in the art that the support described is susceptible to numerous variations and modifications, and that all the details mentioned can be substituted by other technically equivalent, without departing the scope of protection defined by the following claims.

## Claims

1. Support (1) for electrical devices, comprising a casing (2) housing a plurality of electrical devices (3) arranged in a row such that a longitudinal axis (21) of the casing (2) is defined, a fixation plate (4) to a surface (5), wherein the support (1) comprises an articulation axis (6) linking the plate (4) and the casing (2) arranged at the end of the casing (2) perpendicular to the plate (4) and to the longitudinal axis (21) of the casing (2), such that when fixing the plate (4) to the surface (5), it is possible to rotate the casing (2) between two positions along an angle (β), **characterised in that** the fixation plate (4) and the casing (2) are configured so that when the fixation plate (4) is fixed to the surface (5) the casing (2) remains below the surface (5) for all the rotating positions adopted between said two positions along said angle (β).

2. Support (1) according to the preceding claim, wherein the plate (4) comprises a circular guide (7) which encompasses an angle (β) and a retention element (8a) between said circular guide (7) and the casing (2) which allows the rotating movement of the casing (2) with respect to the plate (4).

3. Support (1) according to any of the previous claims, comprising locking means in at least the initial and final positions along the angle (β).

4. Support (1) according to the preceding claim, wherein said locking means comprise a stem (9) arranged for moving longitudinally with respect to the casing (2), a lever (10) to operate the stem (9) at the end of the casing (2) adjacent to the articulation axis (6), a protrusion (11) of the plate (4) provided with at least two holes (12) in which the stem (9) engages when the casing (2) is located at the end positions and a spring (13) which pulls the stem (9) towards said holes (12).

5. Support (1) according to the preceding claim, wherein the lever (10) is articulated with an end lower edge of the casing (2), such that the liberation is done by pressing down the lever.

6. Support (1) according to the preceding claim, wherein the lever (10) is made of a pleated sheet.

7. Support (1) according to claims 5^{a} and 6^{a}, wherein the lever (10) has a cut-out (15) in its lower horizontal wall.

8. Support (1) according to any of the previous claims, wherein the electrical devices (3) belong to a multiple socket-outlets (14).

9. Support (1) according to any of the previous claims, wherein the casing (2) is shaped in the form of a parallelepiped and its frontal lower part (16) is accessible by using a fixation means (17) to the casing (2).

10. Support (1) according to claim 1, wherein the fixation plate (4) and the casing (2) are configured so that when the fixation plate (4) is fixed to the surface (5) the casing (2) moves along a plane which is parallel to the surface (5) for all the rotating positions adopted between said two positions along said angle (β).

## Patentansprüche

1. Träger (1) für elektrische Vorrichtungen, der ein Gehäuse (2) umfasst, das eine Mehrzahl elektrischer Vorrichtungen (3) aufnimmt, die in einer Reihe angeordnet sind, so dass eine Längsachse (21) des Gehäuses (2) definiert ist, eine Platte (4) zur Fixierung an einer Oberfläche (5), wobei der Träger (1) eine Gelenkachse (6) aufweist, die die Platte (4) und das Gehäuse (2) verbindet, die an dem Ende des Gehäuses (2) senkrecht zu der Platte (4) und zu der Längsachse (21) des Gehäuses (2) angeordnet ist, so dass, wenn die Platte (4) an der Oberfläche (5) fixiert ist, es möglich ist, das Gehäuse (2) zwischen zwei Positionen entlang einem Winkel (β) zu drehen, **dadurch gekennzeichnet, dass** die Fixierungsplatte (4) und das Gehäuse (2) konfiguriert sind, so dass, wenn die Fixierungsplatte (4) an der Oberfläche (5) fixiert ist, das Gehäuse (2) für alle Drehpositionen, die zwischen den zwei Positionen entlang dem Winkel (β) eingenommen werden, unter der Oberfläche (5) bleibt.

2. Träger (1) gemäß dem vorhergehenden Anspruch, bei dem die Platte (4) eine kreisförmige Führung (7), die einen Winkel (β) umfasst, und ein Halteelement (8a) zwischen der kreisförmigen Führung (7) und dem Gehäuse (2) aufweist, das die Drehbewegung des Gehäuses (2) in Bezug auf die Platte (4) ermöglicht.

3. Träger (1) gemäß einem der vorhergehenden Ansprüche, der eine Verriegelungseinrichtung an zumindest der Anfangs- und Endposition entlang dem Winkel (β) aufweist.

4. Träger (1) gemäß dem vorhergehenden Anspruch, bei dem die Verriegelungseinrichtung eine Stange (9), die für eine Längsbewegung in Bezug auf das Gehäuse (2) angeordnet ist, einen Hebel (10) zum Betätigen des Stabs (9) am Ende des Gehäuses (2) benachbart zu der Gelenkachse (6), einen Vorsprung (11) der Platte (4), der mit zumindest zwei Löchern (12) versehen ist, mit denen der Stab (9) Eingriff nimmt, wenn das Gehäuse (2) an den Endpositionen angeordnet ist, und eine Feder (13) aufweist, die den Stab (9) zu den Löchern (12) zieht.

5. Träger (1) gemäß dem vorhergehenden Anspruch, bei dem der Hebel (10) mit einer unteren Endkante des Gehäuses (2) gelenkig verbunden ist, so dass die Ablösung durch Hinunterdrücken des Hebels durchgeführt wird.

6. Träger (1) gemäß dem vorhergehenden Anspruch, bei dem der Hebel (10) aus einer gefalteten Lage gebildet ist.

7. Träger (1) gemäß Anspruch 5 und 6, bei dem der Hebel (10) in seiner unteren horizontalen Wand einen Ausschnitt (15) aufweist.

8. Träger (1) gemäß einem der vorhergehenden Ansprüche, bei dem die elektrischen Vorrichtungen (3) zu einer Mehrfachsteckdose gehören.

9. Träger (1) gemäß einem der vorhergehenden Ansprüche, bei dem das Gehäuse (2) in der Form eines Parallelepipeds geformt ist und sein vorderes Unterteil (16) durch Verwenden einer Fixierungseinrichtung (17) an dem Gehäuse (2) zugänglich ist.

10. Träger (1) gemäß Anspruch 1, bei dem die Fixierungsplatte (4) und das Gehäuse (2) so konfiguriert sind, dass, wenn die Fixierungsplatte (4) an der Oberfläche (5) fixiert ist, das Gehäuse (2) sich für alle Drehpositionen, die zwischen den beiden Positionen entlang dem Winkel (ß) eingenommen werden, entlang einer Ebene bewegt, die parallel zu der Oberfläche (5) ist.

## Revendications

1. Support (1) destiné à des dispositifs électriques, comprenant une enceinte (2) contenant une pluralité de dispositifs électriques (3) disposés en rangée de sorte qu'un axe longitudinal (21) de l'enceinte (2) soit défini, et une plaque de fixation (4) sur une surface (5), dans lequel le support (1) comprend un axe d'articulation (6) qui relie la plaque (4) et l'enceinte (2) disposé à l'extrémité de l'enceinte (2), perpendiculairement à la plaque (4) et à l'axe longitudinal (21) de l'enceinte (2), de sorte que, lors de la fixation de la plaque (4) sur la surface (5), il soit possible de tourner l'enceinte (2) entre deux positions le long d'un angle (β), **caractérisé en ce que** la plaque de fixation (4) et l'enceinte (2) sont configurées de sorte que, lorsque la plaque de fixation (4) est fixée sur la surface (5), l'enceinte (2) reste sous la surface (5) pour toutes les positions de rotation adoptées entre lesdites deux positions le long dudit angle (β).

2. Support (1) selon la revendication précédente, dans lequel la plaque (4) comprend un guide circulaire (7) qui comprend un angle (β) et un élément de retenue (8a) entre ledit guide circulaire (7) et l'enceinte (2) qui permet le mouvement de rotation de l'enceinte (2) par rapport à la plaque (4).

3. Support (1) selon l'une quelconque des revendications précédentes, comprenant un moyen de blocage dans au moins les positions initiale et finale le long de l'angle (β).

4. Support (1) selon la revendication précédente, dans lequel ledit moyen de blocage comprend une tige (9) prévue pour se déplacer longitudinalement par rapport à l'enceinte (2), un levier (10) destiné à actionner la tige (9) à l'extrémité de l'enceinte (2), adjacent à l'axe d'articulation (6), une saillie (11) de la plaque (4) munie d'au moins deux orifices (12) dans lesquels la tige (9) s'engage lorsque l'enceinte (2) se trouve aux extrémités, et un ressort (13) qui tire la tige (9) vers lesdits orifices (12).

5. Support (1) selon la revendication précédente, dans lequel le levier (10) est articulé avec un bord inférieur d'extrémité de l'enceinte (2), de sorte que la libération soit effectuée en appuyant sur le levier.

6. Support (1) selon la revendication précédente, dans lequel le levier (10) est composé d'une tôle plissée.

7. Support (1) selon les revendications 5 et 6, dans lequel le levier (10) possède une découpe (15) dans sa paroi horizontale inférieure.

8. Support (1) selon l'une quelconque des revendications précédentes, dans lequel les dispositifs électriques (3) appartiennent à des prises à fiches multiples (14).

9. Support (1) selon l'une quelconque des revendications précédentes, dans lequel l'enceinte (2) est en forme de parallélépipède et sa partie inférieure frontale (16) est accessible en utilisant un moyen de fixation (17) sur l'enceinte (2).

10. Support (1) selon la revendication 1, dans lequel la plaque de fixation (4) et l'enceinte (2) sont configurées de sorte que, lorsque la plaque de fixation (4) est fixée sur la surface (5), l'enceinte (2) se déplace le long d'un plan qui est parallèle à la surface (5) pour toutes les positions de rotation adoptées entre lesdites deux positions le long dudit angle (β).
